# EUROPEAN PATENT SPECIFICATION

(11) **EP 0 438 082 B1**
(45) Date of publication and mention of the grant of the patent: **08.05.1996**
(21) Application number: 91100286.3
(22) Date of filing: 10.01.1991
(51) Int. Cl.: G02B 6/44, H01B 13/02

(54) **Detorsion stranding machine particularly for making optical fibre bundles**
Detorsionsverseilmaschine, insbesondere für faseroptische Bündel
Dispositif à détorsion de câblage, en particulier pour faisceau à fibre optique

(30) Priority: 12.01.1990 IT 1904890
(43) Date of publication of application: 24.07.1991
(73) Proprietor: ALCATEL CAVI SpA, I-84091 Battipaglia (SA) (IT)
(72) Inventor: Isotton, Adriano, I-04010 Borgo Hermada, Latina (IT)
(74) Representative: Weinmiller, Jürgen

(56) References cited:
- EP-A- 0 116 174
- DE-A- 1 510 130
- DE-A- 2 821 602
- GB-A- 1 544 690
- GB-A- 2 018 845
- US-A- 3 934 395

## Description

The present invention is directed to the technical field of electrical cable manufacturing in general and relates to a torsion-free stranding machine for making a bundle of threadlike elements, in particular of optical fibres.

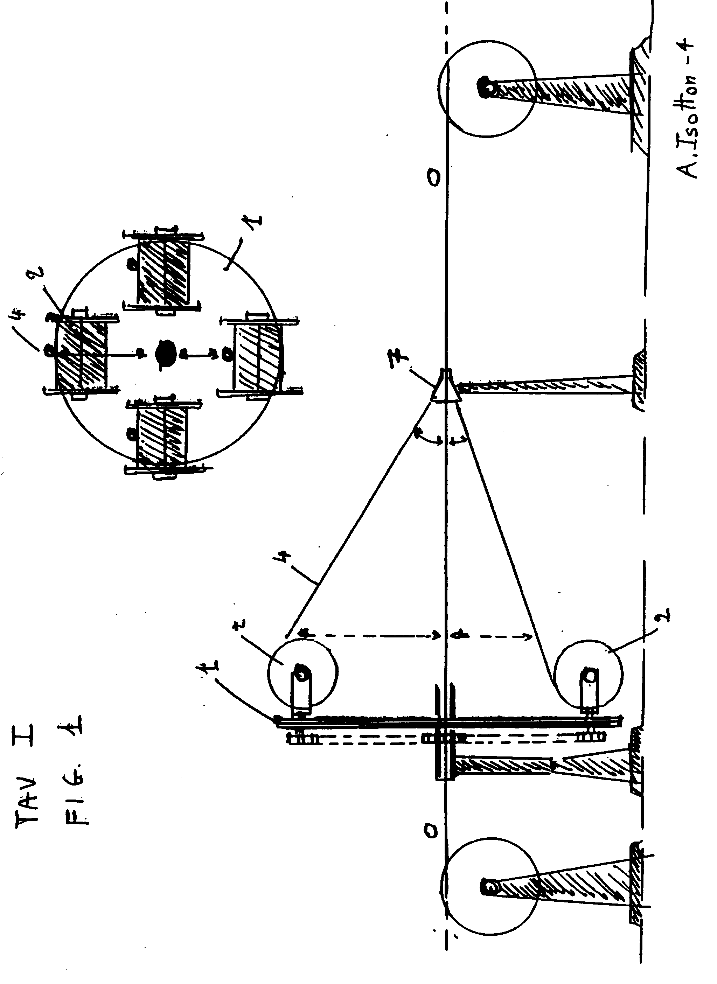

In the known torsion-free stranding machines, a typical diagram thereof being illustrated in fig. 1, the optical fibre bundle is obtained by the rotation of a take-off reel carrying turntable 1, whereon a plurality of torsion-free take off reels 2 are fixed, each of them being arranged to rotate about its own axis, when unwinding one threadlike element, and being arranged to rotate about an axis perpendicular to the plane of the turntable (torsion-free movement), thereby maintaining the orientation of the reel as the turntable rotates, and avoiding torsion in the fibre.

During the rotation of the turntable 1, the fibres 4 describe a cone whose vertex represents the stranding centre and coincides with the so-called machine centre which lies on the axis of rotation of the turntable.

Owing to torsion-free rotation of the reels, this cone is not symmetric with respect to said axis , i.e. the bisectrix of the cone spread angle does not coincide with the axis itself.

All this causes a change in the unwinding rate of the fibre and a consequent fibre loosening and stretching which is detrimental since a breaking of the fibres may occur.

In order to eliminate these drawbacks, motor-driven torsion-free take-off reels have been used with braking controlled by sophisticated electronic control means. However these provisions, besides solving only partially the problem, make the machine very complicated with a consequent increase in costs.

The main object of the present invention is to provide a stranding machine of the type mentioned at the outset which eliminates the aforesaid drawbacks of fibre loosening and stretching without using the above-mentioned electronic control means.

Another object of the present invention is to design a stranding machine of the type referred at the outset as to be simple and economical if compared with torsion-free stranding machines available on the market.

These and other objects, which will be clearer hereinafter, are substantially achieved by a stranding machine having the features set forth in the claims.

The general concept of the invention consists in using a torsion-free stranding machine which preferably operates vertically and where the fibre stranding centre is eccentric with respect to the machine centre. More in detail, the fibre stranding centre is offset , with respect to the turntable rotation axis passing through the machine centre , by a distance substantially equal to the diameter of the filled unwinding coil.

This result is obtained in that, for each antitorsional arm of the torsion-free take-off reel unit, a revolvable arm equipped with a fibre- guide is provided , and in that the stranding die is mounted on a mount which is adjustable along three orthogonal directions x, y, z.

Other features and advantages of the invention will be described with reference to a preferred embodiment given as an indicative but not limitative example, taken in conjunction with the attached drawings, where :
- figure 1 is a typical diagram of a horizontal torsion-free stranding machine of the prior art ;
- figure 2 represents schematically an elevation view of a vertical torsion-free stranding machine according to the invention;
- figure 3 is a bottom plan view of the take-off reel carrying turntable for the stranding machine in fig. 2 ; and
- figure 4 is an elevation view of the turntable of fig. 3.

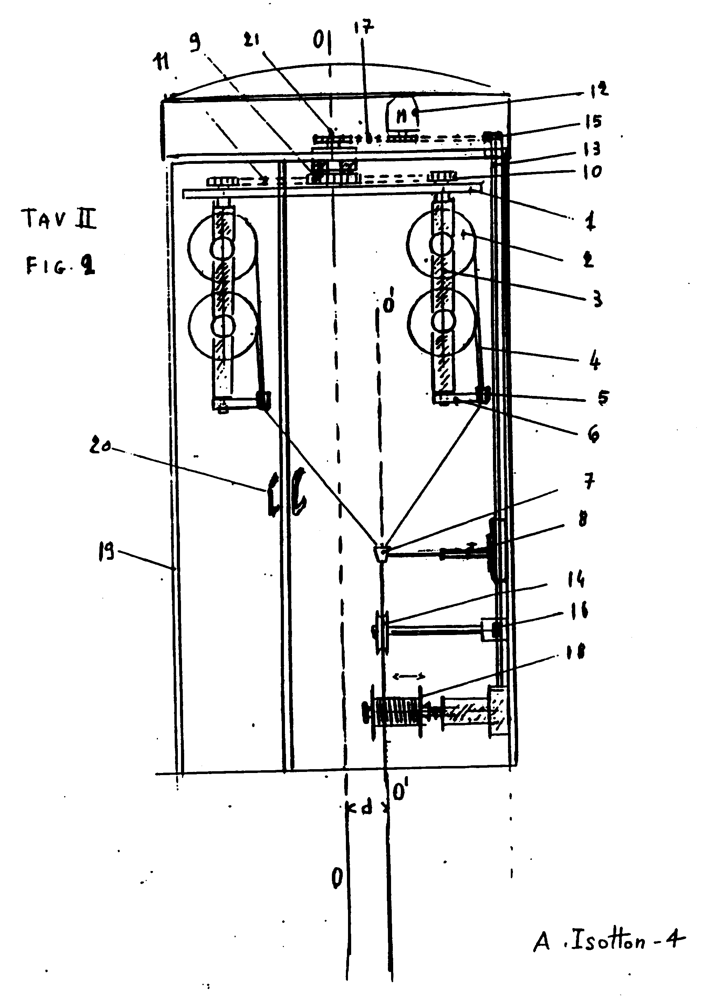

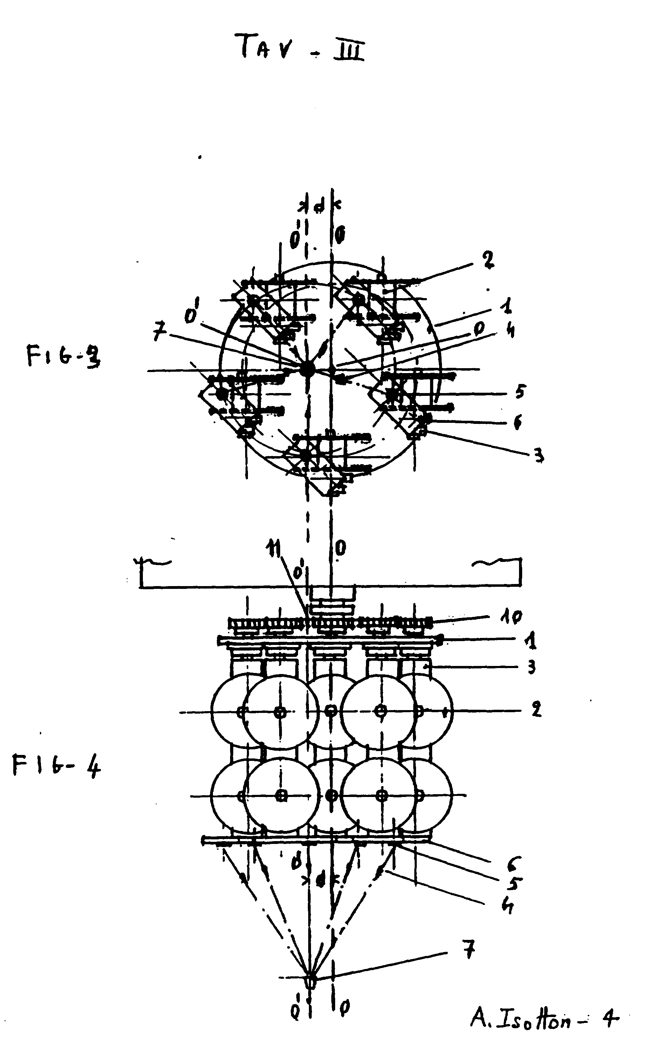

Referring now to fig. 2 to 4, the machine according to the invention consists essentially of a horizontal turntable 1 whereon a plurality of torsion-free take-off reel units are mounted, each comprising preferably a pair of reels 2 fixed on take-off reel unit shafts having one end pivotally mounted on an antitorsional arm 3 which has an end pivotally mounted on the turntable 1 and extends downwards perpendicularly thereto . Each take-off reel unit allows the unwinding of two threadlike elements or fibres 4 for each antitorsional arm 3 and is equipped with a reel braking mechanical system implemented by means of special harmonic rods with pads (not shown), each acting on the respective take-off reel unit shaft and being micrometrically adjusted by means of a special screw having a braking sensibility of ± 2g in the range 5 ö 50g (values used for optical fibre stranding).

Both the optical fibres pass through a fibre-guide 5 located at the free end of a revolvable arm 6 by which it is possible to adjust the angle which the fibre makes with 0'-0' axis passing through the stranding centre and parallel to the axis of rotation 0-0 of the turntable. The other end of the arm 6 is adjustably fixed to the free end of the antitorsional arm 3 . The fibre stranding centre is determined by a die 7 fixed to mount 8 in a position which is eccentric with respect to the rotation axis 0-0 of the turntable and adjustable along three orthogonal directions x, y, z.

Turntable 1 is rotated in a conventional manner about its axis by motor 12 which drives , through toothed belt 17, gear wheel 21 keyed on the same shaft of another gear wheel 9 rigidly fixed to turntable 1.

Said gear wheel 9 drives, via a driving belt 11, the gears 10 rigidly fixed to antitorsional arms 3.

Motor 12 drives, via belt 17, gear 15 keyed on a vertical shaft 13 which drives in turn a drawing flywheel 14 through gear 16. Vertical shaft 13 drives also the coiler 18 or rack for collecting the fibre bundle. Reference numeral 19 indicates the cylindrical protection , made of special and transparent material, having an opening 20 at one side for loading , control and other operations.

After a description in a mainly structural meaning, the operation of the torsion-free stranding machine according to the invention is the following.

Motor 12 , which is controlled as to both speed and leading and trailing ramps, rotates via the toothed belt 17 and the pair of gears 21 and 9, cause rotation of the turntable 1 which in turn transmits the torsion-free movement, by means of the driving belt 11, to double take-off reel units. The whole is controlled in such a way that each antitorsional arm 3 is rotated a full turn for each turn of the turntable 1, so that the reels mounted thereon (3) still maintain the same orientation thus avoiding the fibre torsion.

By adjusting, with a template if necessary, the revolving arms 6 and the adjustable mount 8, the fibre guide 5 and the stranding die 7 define a right circular cone whose axis 0'-0 is parallel to 0-0 axis and spaced therefrom by a distance "d" substantially equal to the filled reel diameter.

The invention thus achieves the proposed objects. In particular, there is provided a vertically operating torsion-free stranding machine for making optical fibre bundles which is free from fibre loosening and stretching, very simple to manufacture and therefore somewhat economical.

The particular which allows to make the fibre stranding with an optimal unwinding angle, so that fibre loosening and stretching are thus eliminated, is represented by revolving arms 6 which allow to form the cone with the vertex (stranding centre) offset from the machine centre by a distance (d) substantially equal to the filled reel diameter.

Simplicity and saving of the machine are achieved by the absence of sophisticated unwinding and braking control systems.

The use of a pair of reels mounted on a single antitorsional arm allows a considerable reduction of the turntable diameter and therefore lower dimensions and higher stranding velocity.

It is understood that several variants in addition to the hereinbefore described embodiment are also possible without leaving the inventive sphere.

In particular the machine makes the stranding of optical fibres and other kinds of metallic or less threadlike elements.

## Claims

1. A torsion-free stranding machine for making a bundle of threadlike elements , in particular of optical fibres, of the type comprising: a take-off reel carrying turntable (1) carrying a plurality of torsion-free take off reel units symmetrically disposed with respect to the centre thereof and arranged to unwind the threadlike elements (4) to be stranded ; a stranding die (7) through which said threadlike elements (4) are guided to make said bundle ; means (14, 18) for drawing and collecting said bundle ; and means (12, 17) for generating and imparting the necessary motion to the turntable (1) and the take-off reel units to cause them to co-operate together to help form a bundle, whereby, each take-off reel unit is arranged to rotate both about its own axis, when unwinding one threadlike element, and is arranged to rotate about an axis perpendicular to the plane of the turntable (torsion-free movement), thereby maintaining the orientation of the take-off reel unit as the turntable rotates, and avoiding torsion in the threadlike element characterized in that, the machine is arranged so that during rotation of the turntable (1), the threadlike element sections extending between the take-off reel units and the stranding die (7) describe a right circular cone whose vertex lies at the die and whose axis (0'-0') is parallel to the axis of rotation (0-0) of the turntable (1) and is spaced therefrom by a predetermined distance "d".

2. A torsion-free stranding machine according to claim 1, wherein each of said take-off reel units comprises :
- an antitorsional arm (3) having a first end pivotally mounted on said turntable and engaged with said means for generating and transmitting motion, and a second end extending perpendicularly to the turntable, toward the stranding die (7) ;
- at least one shaft having one end pivotally mounted on said antitorsional arm and extending perpendicularly thereto ;
- a reel (2) having the optical fibre wound thereon and fixed on each shaft ;
- a revolvable arm (6) having a first end fixed, in an adjustable manner, to said second end of said antitorsional arm (3) and extending orthogonally thereto ;
- a fibre-guide (5) mounted at the second end of said revolving arm (6), at a distance from the antitorsional arm axis substantially equal to the radius of said reel and arranged to allow the unwound fibre to pass therethrough ; and - adjustable braking means for said at least one take-off reel unit shaft ;
and wherein said stranding die (7) is fixed on a mount (8) adjustable along three orthogonal directions x, y, z, whereby each revolvable arm (6) of said take-off reel units and said adjustable mount (8) may be arranged in such a way that the centre of each fibre-guide (5) lies on the base circumference, and the die (7) coincides with the vertex, of said right circular cone.

3. A torsion-free stranding machine according to claim 2, wherein said braking means comprise at least a harmonic rod with pads acting on said shaft, said harmonic rod being adjustable through a micrometric screw having a braking sensibility of ± 2g in the range of 5 ö 50g.

4. A torsion-free stranding machine according to claim 1, wherein said distance "d" is substantially equal to the diameter of said a reel.

## Patentansprüche

1. Maschine zum torsionsfreien Verseilen und zur Herstellung eines Bündels von fadenförmigen Elementen, insbesondere Lichtleitfasern, mit einer Vorratsspulen tragenden Drehscheibe (1), die eine Vielzahl von torsionsfreien Vorratsspuleneinheiten trägt, welche symmetrisch bezüglich des Scheibenzentrums angeordnet sind und die zu verseilenden fadenförmigen Elemente (4) zum Abzug bereithalten, mit einer Verseildüse (7), durch die die fadenförmigen Elemente (4) zur Bildung des Bündels geführt werden, mit Mitteln (14, 18), um das Bündel zu ziehen und aufzuwickeln, und mit Mitteln (12, 17), um der Drehscheibe (1) und den Vorratsspuleneinheiten die notwendige Bewegung zu verleihen, damit sie zusammenwirken bei der Bildung eines Bündels, wobei jede Vorratsspuleneinheit sowohl um ihre eigene Achse beim Abziehen eines fadenförmigen Elements als auch um eine Achse senkrecht zur Ebene der Drehscheibe drehen kann (torsionsfreie Bewegung), so daß die Orientierung der Vorratsspuleneinheiten bei der Drehung der Drehscheibe beibehalten bleibt und eine Torsion in dem fadenförmigen Element vermieden wird, dadurch gekennzeichnet, daß die Maschine so ausgebildet ist, daß während der Drehung der Drehscheibe (1) die Bereiche des fadenförmigen Elements, die sich zwischen den Vorratsspuleneinheiten und der Verseildüse (7) befinden, einen geraden Kegel mit Kreisquerschnitt beschreiben, dessen Spitze sich an der Düse befindet und dessen Achse (O'-O') parallel zur Drehachse (O-O) der Drehscheibe (1) und in einem vorbestimmten Abstand d davon verläuft.

2. Verseilmaschine nach Anspruch 1, in der jede der Vorratsspuleneinheiten enthält:
- einen die Torsion verhindernden Arm (3), der mit einem ersten Ende drehbar auf der Drehscheibe befestigt ist und mit den Mitteln zum Antrieb der Drehscheibe gekoppelt ist, während dessen zweites Ende sich senkrecht zur Drehscheibe in Richtung zur Verseildüse (7) erstreckt,
- mindestens eine Welle, die mit einem Ende drehbar auf dem die Torsion verhindernden Arm befestigt ist und sich senkrecht dazu erstreckt,
- eine Spule (2), auf die die Lichtleitfaser gewickelt ist und die auf jeder Welle befestigt ist,
- einen drehbaren Arm (6), der mit einem ersten Ende auf justierbare Weise am zweiten Ende des die Torsion verhindernden Arms (3) befestigt ist und sich senkrecht dazu erstreckt,
- eine Faserführung (5), die auf dem zweiten Ende des drehbaren Arms (6) in einem Abstand von der Achse des die Torsion verhindernden Arms befestigt ist, der im wesentlichen dem Radius der Vorratsspule gleicht, so daß die abgezogene Faser durch die Führung verlaufen kann,
- und justierbare Bremsmittel für die Vorratsspulenwelle oder -wellen, und wobei die Verseildüse (7) auf einem Fuß (8) befestigt ist, der entlang von drei zueinander senkrechten Richtungen x, y, z justierbar ist und wobei jeder drehbare Arm (6) der Vorratsspuleneinheiten und der justierbare Fuß (8) so angeordnet sein können, daß das Zentrum jeder Faserführung (5) am Basisumfang des geraden Kegels mit Kreisquerschnitt und die Düse (7) an der Spitze dieses Kegels liegt.

3. Verseilmaschine nach Anspruch 2, bei der die Bremsmittel mindestens einen harmonischen Stab mit Polstern besitzen, die auf die Welle einwirken, wobei der harmonische Stab mittels Mikrometerschraube einstellbar ist, deren Bremsempfindlichkeit ±2g im Bereich von 5 bis 50 g beträgt.

4. Verseilmaschine nach Anspruch 1, bei der der Abstand d im wesentlichen gleich dem Durchmesser einer Vorratsspule ist.

## Revendications

1. Machine à toronner sans torsion pour fabriquer un faisceau d'éléments du type fil, en particulier de fibres optiques, du type comportant: une table tournante (1), support de bobines débitrices, portant une pluralité d'assemblages de bobines débitrices sans torsion, symétriquement disposés par rapport à son centre et conçus pour débobiner les éléments du type fil (4) à toronner; une filière de toronnage (7) à travers laquelle lesdits éléments du type fil (4) sont guidés pour fabriquer ledit faisceau, des moyens (14, 18) pour tirer et collecter ledit faisceau; et des moyens (12, 17) pour générer et appliquer le mouvement nécessaire à la table tournante (1) et aux assemblages de bobines débitrices pour les amener à coopérer ensemble pour aider à former un faisceau, ce par quoi, chaque assemblage de bobines débitrices est disposé pour tourner à la fois autour de son propre axe, lors du débobinage d'un élément du type fil, et est disposé pour tourner autour d'un axe perpendiculaire au plan de la table tournante (mouvement sans torsion), maintenant ainsi l'orientation de l'assemblage de bobines débitrices lorsque la table tournante est entraînée en rotation, et évitant une torsion dans l'élément du type fil.
caractérisée par le fait que la machine est conçue de façon qu'au cours d'une rotation de la table tournante (1) les sections des éléments du type fil s'étendant entre les assemblages de bobines débitrices et la filière de toronnage (7) décrivent un cône circulaire droit dont le sommet se trouve à la filière et dont l'axe (O'-O') est parallèle à l'axe de rotation (O-O) de la table tournante (1) et en est espacé d'une distance prédéterminée "d".

2. Machine à toronner sans torsion selon la revendication 1, dans laquelle chacun desdits assemblages de bobines débitrices comporte:
- un bras anti-torsion (3) présentant une première extrémité montée, avec liberté de pivotement, sur ladite table tournante et venant en prise avec lesdits moyens prévus pour générer et transmettre un mouvement, et une seconde extrémité s'étendant perpendiculairement à la table tournante, en direction de la filière de toronnage (7);
- au moins un axe présentant une extrémité montée, avec liberté de pivotement, sur ledit bras anti-torsion et s'étendant perpendiculairement à ce bras.
- une bobine (2) sur laquelle est bobinée la fibre optique, fixée sur chaque axe.
- un bras tournant (6) présentant une première extrémité fixée de façon réglable, à ladite seconde extrémité dudit bras anti-torsion (3) et s'étendant orthogonalement à ce bras.
- un guide-fibre (5) monté à la seconde extrémité dudit bras tournant (6), à une distance de l'axe du bras anti-torsion sensiblement égale au rayon de ladite bobine et disposé pour permettre à la fibre débobinée de le traverser; et
- des moyens de freinage réglables pour ledit axe de l'assemblage de bobines débitrices, dont il y a au moins un;
et dans laquelle ladite filière de toronnage (7) est fixée sur une monture (8) réglable selon les trois directions orthogonales x, y, z, ce par quoi chaque bras tournant (6) desdits assemblages de bobine débitrice et ladite monture réglable (8) peuvent être disposés de façon que le centre de chaque guide-fibre (5) se trouve sur la circonférence de base et que la filière (7) coïncide avec le sommet dudit cône circulaire droit.

3. Machine à toronner sans torsion selon la revendication 2, dans laquelle lesdits moyens de freinage comportent au moins une tige harmonique avec patins agissant sur ledit axe, ladite tige harmonique étant réglable au moyen d'une vis micrométrique d'une sensibilité de freinage de ± 2g sur la plage allant de 5 à 50g.

4. Machine à toronner sans torsion selon la revendication 1, dans laquelle ladite distance "d" est sensiblement égale au diamètre d'une dite bobine.
